# EUROPÄISCHE PATENTSCHRIFT

(11) **EP 3 047 990 B1**
(45) Veröffentlichungstag und Bekanntmachung des Hinweises auf die Patenterteilung: **02.08.2017**
(21) Anmeldenummer: 16150195.2
(22) Anmeldetag: 05.01.2016
(51) Int. Cl.: B60J 7/12

(54) **FALTVERDECK FÜR KRAFTFAHRZEUGE**
FOLDING TOP FOR MOTOR VEHICLES
TOIT ESCAMOTABLE POUR DES VEHICULES AUTOMOBILES

(30) Priorität: 23.01.2015 DE 102015201190
(43) Veröffentlichungstag der Anmeldung: 27.07.2016
(73) Patentinhaber: Magna Car Top Systems GmbH, 74321 Bietigheim-Bissingen (DE)
(72) Erfinder: KAILASAPATHI, Shankar, 70199 Stuttgart (DE)
(74) Vertreter: Rausch, Gabriele

(56) Entgegenhaltungen:
- DE-B3-102013 213 429
- DE-U1- 20 005 180
- DE-U1- 29 607 114

## Beschreibung

### Gebiet der Erfindung

Die vorliegende Erfindung betrifft ein Faltverdeck für Kraftfahrzeuge, wobei das Faltverdeck zwischen einer einen Fahrgastinnenraum überspannenden Schließstellung und einer in einen Aufbewahrungsraum abgelegten Offenstellung bringbar ist, umfassend ein Dachflächenbauteil, einen Verdeckbezug, einen Anzugstreifen des Verdeckbezugs, einen Innenhimmel und eine Halteleiste, wobei die Halteleiste quer zur Fahrzeuglängsrichtung angeordnet ist, wobei die Halteleiste mit dem Dachflächenbauteil in Eingriff ist.

### Stand der Technik

Faltbare Verdecke besitzen an der Linie, der Dachspitze, die dem oberen Rand der Windschutzscheibe entspricht, eine Halterung, die vom Verdeckbezug umspannt und für die Verriegelung und Dichtung des Verdecks am Rahmen der Windschutzscheibe dienen. Weiterhin ist es für Verdecke üblich einen Innenhimmel im Innenbereich des Verdecks anzubringen.

Aus der DE102011056731A1 ist eine Lösung bekannt, bei der der Verdeckbezug um die Dachspitze bis zu einer Innenseite der Dachplatte herumgeführt und dort mit einer Halteleiste an einem Befestigungssteg der Dachplatte durch Clipsen befestigt ist. Der Befestigungssteg ist vorzugsweise einstückig mit der Dachplatte realisiert. Über eine so genannte Stoffhalteleiste, die im Querschnitt im Wesentlichen L-förmig ausgeführt ist, drückt einerseits die Halteleiste auf den Befestigungssteg und andererseits mit einem vorderen freien Ende direkt auf den um die Dachspitze herumgelegten Verdeckbezug. Die L-förmige Halteleiste ist an einer von einer Innenfläche des Flächenstücks ausgehenden Hülse, vorzugsweise durch eine Schraube, befestigt. Diese Lösung der Befestigung des Verdeckbezugs an der Dachspitze eines Fahrzeugs ist aufwändig in der Montage.

In der DE29720065U1 ist ein Faltverdeck bekannt, wobei zur Festlegung des Himmels am formsteifen Rahmenteil des Faltverdecks am Rahmenteil zumindest ein querverlaufender, nach unten ragender Steg ausgebildet ist, auf den die querverlaufende Profilleiste aufsteckbar ist. Der DE 200 05 180 U gilt als Stand der Technik Dokument.

### Zusammenfassung der Erfindung

Es ist eine Aufgabe der Erfindung, ein Faltverdeck mit einem Innenhimmel vorzusehen, bei dem die Montage aller Bauteile und eines Innenhimmels einfach und kostengünstig an einem Dachflächenbauteil realisiert werden kann.

Die Lösung der Aufgabe erfolgt durch ein Faltverdeck wie beansprucht in Hauptanspruch 1. Diese Anordnung gewährleitet, dass eine sichere definierte Verbindung zwischen dem Innenhimmel und dem Dachflächenbauteil hergestellt wird, da die mit dem Verdeckbezug verbundene Halteleiste im ersten Endbereich im Dachflächenbauteil eingehakt ist.

Der Innenhimmel kann dabei direkt oder indirekt mit dem zweiten Endbereich verbunden sein.

Unter Dachflächenbauteil wird jedes Dachteil verstanden, welches gegen das Fahrzeug, vorzugsweise den Windschutzscheibenrahmen, verriegelt bzw. entriegelt werden kann. In einer bevorzugten Ausführungsform kann es die Dachkappe sein.

Als Faltverdeck wird jedes sich öffnende Dach verstanden, welches durch Falten des Dachteils oder des Verdeckbezugs zumindest teilweise den Innenraum eines Kraftfahrzeugs freigeben kann.

Unter Aufbewahrungsraum bei abgelegter Offenstellung wird jeder Raum verstanden in dem das gefaltete Dach abgelegt sein kann, wobei jede dem Fachmann aus dem Stand der Technik bekannte Ablageposition für Faltdächer eingeschlossen ist.

Weiterbildungen der Erfindung sind in den abhängigen Ansprüchen, der Beschreibung sowie den beigefügten Zeichnungen angegeben.

Das Dachflächenbauteil weist in einer erfindungsgemäßen Ausführungsform zumindest eine Ausnehmung zur Aufnahme der Geometrie des ersten Endbereichs der Halteleiste auf.

Die Geometrie des ersten Endbereichs der Halteleiste wird durch die Ausnehmung des Dachflächenbauteils durch gesteckt und weist dabei zumindest ein Element auf, welches ein Einhaken im Dachflächenbauteil ermöglicht.

Die Halteleiste weist in einer bevorzugten Ausführungsform eine Vielzahl von Geometrien zum Einhaken im ersten Endbereich auf, wodurch eine zuverlässige Verbindung mit dem Dachflächenbauteil erreicht wird.

In einer bevorzugten Ausführungsform ist die Halteleiste an den Anzugstreifen des Verdeckbezugs angenäht.

Alternativ ist jedoch auch denkbar, dass die Halteleiste durch beispielsweise Nieten oder Schweißen mit dem Anzugstreifen des Verdeckbezugs dauerhaft verbunden wird.

Die Halteleiste erstreckt sich dabei im Wesentlichen quer zur Fahrzeuglängsrichtung.

Die Halteleiste ist in einer bevorzugten Ausführungsform aus Kunststoff hergestellt, beispielsweise durch ein Spritzgussverfahren. Die Halteleiste kann alternativ auch metallisch, beispielsweise als Aluminium-Legierung, aus Zink im Zinkdruckgussverfahren, oder Stahl hergestellt sein.

Der Anzugstreifen des Verdeckbezugs ist erfindungsgemäß an der Oberseite der Halteleiste angenäht. Der Anzugstreifen des Verdeckbezugs ist dabei bevorzugt mit einem ersten Ende an der Halteleiste befestigt.

Der Anzugstreifen des Verdeckbezugs ist an einem zweiten Ende mit dem Verdeckbezug, bevorzugt durch Annähen, verbunden. Der Anzugstreifen des Verdeckbezugs dient dazu, dass der während der Fahrt kein sogenannter "Balooningeffekt" auftreten kann und so der Verdeckbezug seine gespannte Position am Faltverdeck beibehält.

Die Halteleiste ist in einer bevorzugten Ausführungsform lösbar mit dem Dachflächenbauteil verbunden.

Der erste Endbereich der Halteleiste weist einen Verankerungsabschnitt auf. Dieser Verankerungsabschnitt hakt im Dachflächenbauteil ein und verhindert, dass sich die Halteleiste vom Dachflächenbauteil lösen kann. Der Verankerungsabschnitt ist im Querschnitt bevorzugt pilz- oder ankerförmig ausgebildet.

Der Verankerungsabschnitt ist bevorzugt elastisch ausgebildet. Die pilz- oder ankerförmige Ausbildung kann dadurch durch die Ausnehmung des Dachflächenbauteils durch gesteckt werden, wodurch die Schenkel des Verankerungsabschnitts elastisch verformt werden. Wenn der Verankerungsabschnitt durch die Ausnehmung des Dachflächenbauteils durch gesteckt ist spreizen die Schenkel des Verankerungsabschnitts wieder auseinander wodurch die Halteleiste in der Ausnehmung gehalten wird.

Der Verankerungsabschnitt ist im Wesentlichen in Z-Richtung nach oben ausgebildet.

Die Halteleiste kann dadurch nicht nach unten fallen und ist so verliersicher mit dem Dachflächenbauteil verbunden. Die Halteleiste wird zusätzlich durch die Stoffspannung des Anzugstreifens des Verdeckbezugs und durch den Innenhimmel in seiner Lage gehalten.

In dem erfindungsgemäßen Ausführungsform bildet der zweite Endbereich der Halteleiste ein U-Profil aus.

Der Innenhimmel ist mit dem U-Profil verbunden, insbesondere durch Einhängen eines Haltestabs des Innenhimmels in das U-Profil.

In einer alternativen Ausführungsform kann ein Ende des U-Profils aufgebogen sein, wodurch der Haltestab des Innenhimmels verliersicher im U-Profil gehalten ist.

Der Haltestab ist in einer bevorzugten Ausführungsform aus einem relativ steifen Kunststoff, beispielsweise durch Spritzgießen, hergestellt. Der Haltestab weist einen runden Abschnitt und einen daran angrenzenden länglichen Abschnitt, wobei der runde Abschnitt im U-Profil der Halteleiste eingehängt wird. Der angrenzende längliche Abschnitt wird durch beispielsweise Kleben oder Annähen mit einem Ende des Innenhimmels verbunden.

Der Innenhimmel wird dabei gespannt, wodurch im Fahrgastinnenraum eine ästhetische Ansicht erreicht wird. Der Innenhimmel kann sich dabei zusätzlich an einem Verkleidungsteil im Fahrgastinnenraum abstützen, wodurch eine verbesserte Spannung des Innenhimmels erzielt wird.

In einer besonders bevorzugten Ausführungsform ist der zweite Endbereich der Halteleiste im verbauten Zustand in Fahrzeuglängsrichtung hinten angeordnet.

### Kurzbeschreibung der Zeichnungen

Die Erfindung wird im Folgenden beispielhaft unter Bezugnahme auf die Zeichnungen beschrieben.
- Fig. 1a: zeigt eine Seitenansicht einer erfindungsgemäßen Halteleiste.
- Fig. 1b: zeigt eine Seitenansicht einer alternativ ausgebildeten erfindungsgemäßen Halteleiste.
- Fig. 2: zeigt einen Bereich des erfindungsgemäßen Faltverdecks in Seitenansicht.
- Fig. 3: zeigt eine perspektivische Ansicht der erfindungsgemäßen Halteleiste.

### Detaillierte Beschreibung der Erfindung

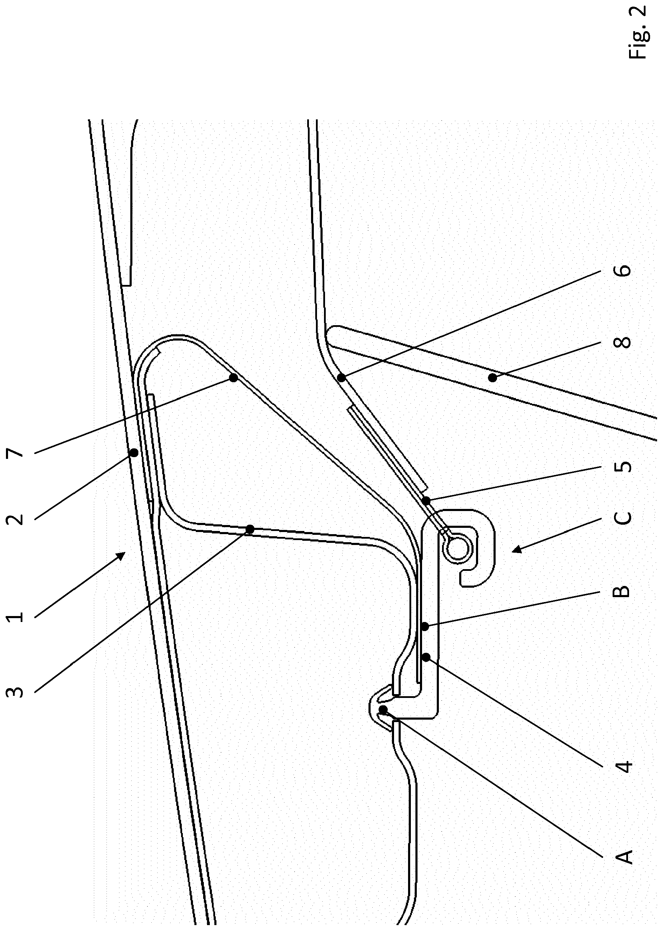

Fig. 2 zeigt einen Bereich des erfindungsgemäßen Faltverdecks 1, der einen Querschnitt durch die Dachspitze mit Verdeckbefestigung und Dichtung darstellt. Das Faltverdeck 1 weist einen Verdeckbezug 2 auf, wobei eine Halteleiste 4 im Dachflächenbauteil 3 eingehakt ist. Die Halteleiste 4 weist einen ersten Endbereich A auf, wobei dieser Verankerungsabschnitt in einer bevorzugten Ausführungsform nach oben erstreckend ausgebildet ist. Der Verankerungsabschnitt des ersten Endabschnitts A ist vorzugsweise elastisch ausgebildet, wodurch der Verankerungsabschnitt leichter durch eine hierfür vorgesehene Ausnehmung im Dachflächenbauteil 3 durchsteckbar ist. Die pilz- oder ankerförmige Ausbildung des Verankerungsabschnitts kann sich nach dem Durchstecken durch die Ausnehmung des Dachflächenbauteils 3 wieder spreizen, wodurch die Halteleiste 4 verliersicher mit dem Dachflächenbauteil 3 lösbar verbunden ist. Gerade durch die Vorinstallation der Halteleiste am Dachflächenbauteil besteht der Vorteil der Konstruktion. In der Montage ist damit die Halteleiste schon sicher befestigt und weitere Bauteile können anschließend definiert befestigt werden.

Die Halteleiste 4 weist einen Zwischenbereich B auf, die zur Anbindung des Innenhimmels 6 dient. Der Zwischenbereich B ist zwischen dem ersten Endbereich A und dem zweiten Endbereich C der Halteleiste 4 angeordnet und ist im Wesentlichen ein länglich verlaufender Abschnitt. Ein erstes Ende eines Anzugstreifens 7 ist von oben am Zwischenbereich B angenäht. Der Anzugstreifen 7 weist ein zweites Ende auf, welches in einer bevorzugten Ausführungsform mit dem Verdeckbezug 2, beispielsweise durch Annähen, verbunden ist. Der Anzugstreifen 7 verhindert während der Fahrt einen möglichen "Balooningeffekt", bei dem sich der Verdeckbezug durch den Fahrtwind nach oben wölben kann. Der zweite Endbereich C ist in einer bevorzugten Ausführungsform als U-Profil ausgebildet. In dieses U-Profil wird ein mit dem Innenhimmel 6 verbundener Haltestab 5 eingehängt, wodurch der Innenhimmel 6 im geschlossenen Zustand des Verdecks gespannt wird und ein ästhetisches Bild im Fahrgastinnenraum erzeugt. Der Innenhimmel 6 kann sich an einer Verkleidung 8 abstützen, wodurch eine verbesserte Spannung des Innenhimmels 6 erzeugt werden kann.

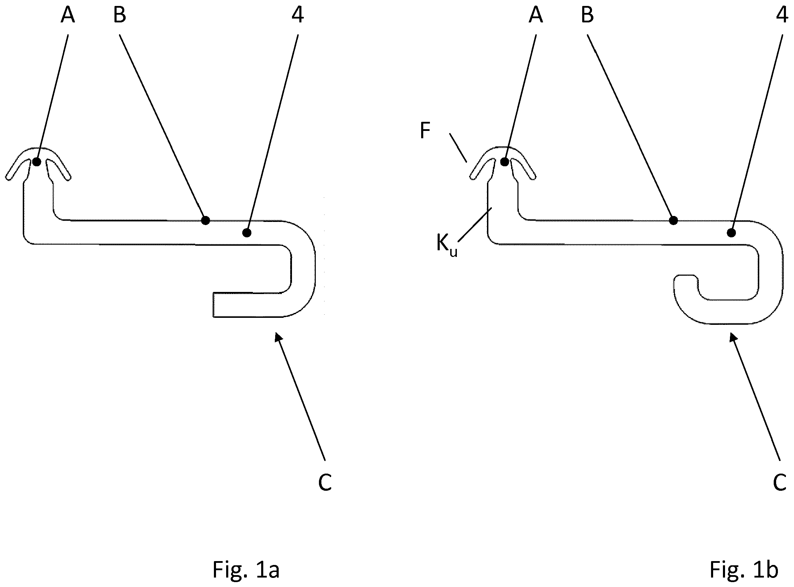

In Fig. 1a ist eine erfindungsgemäße Halteleiste 4 in einen Schnittbild dargestellt. In Fig. 1b wird eine alternative Ausführungsform dargestellt. Die Halteleiste 4 weist einen ersten Endbereich A und einem dem ersten Endbereich A gegenüberliegenden zweiten Endbereich C auf. Der erste Endbereich A weist einen Verankerungsabschnitt auf. Der Verankerungsabschnitt ist in einer bevorzugen Ausführungsform im Querschnitt pilz- oder ankerförmig ausgebildet. Die Halteleiste 4 weist im zweiten Endbereich C ein U-Profil auf, wobei in Fig. 1b ein Ende des U-Profils aufgebogen ist. Die verbleibende Öffnung des U-Profils muss gerade groß genug sein, um den Kopf des Haltestabs zu umfassen.

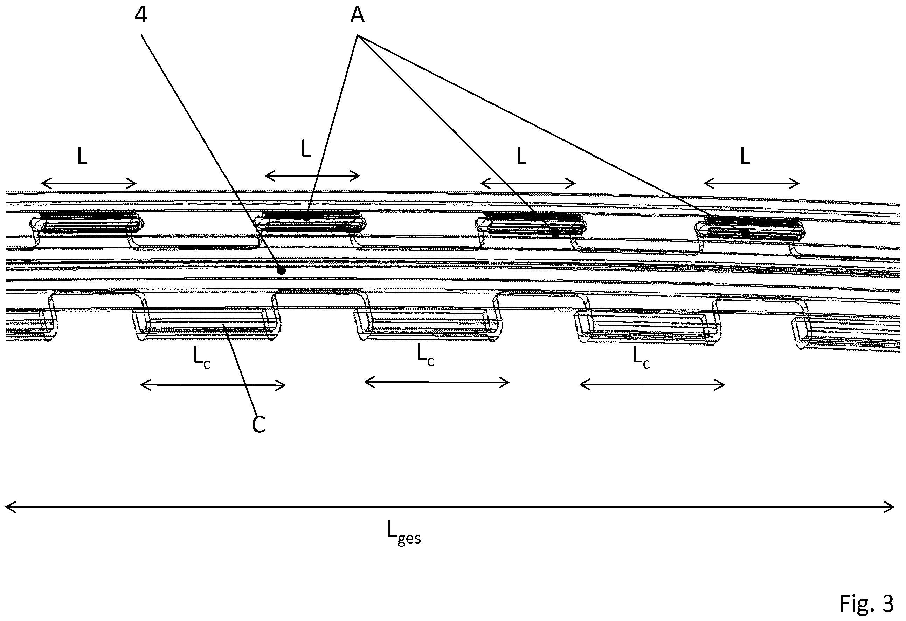

Der Querschnitt kann für zwei unterschiedliche Ausführungsformen dienen, einer Form, in dem der Verankerungsabschnitt B ein zylindrischer Körper ist, oder eine Ausführungsform nach Fig. 3, in der der Verankerungsabschnitt B eine Befestigungsleiste ist.

Es sind flügelförmige Strukturen F vorhanden, die sich um einen zylindrischen Körper um 360° erstrecken. Alternativ können auch einzelne getrennte Flügel F verwendet werden. Der zylindrische Körper K ist so ausgebildet, das es in seinem unteren Bereich Kᵤ dem Durchmesser der Öffnung im Dachflächenbauteil 3 entspricht. Der zylindrische Körper verjüngt sich zur Spitze hin, um ein einfacheres Einführen mit an den Körper angepressten Flügeln F zu erlauben.

In Fig. 3 ist eine erfindungsgemäße Halteleiste 4 in perspektivischer Ansicht dargestellt. Die Halteleiste 4 weist eine Vielzahl von Verankerungsabschnitten A auf, welche durch entsprechende Ausnehmungen im Dachflächenbauteil 3 durchsteckbar sind.
Dabei weisen die Verbindungsstrukturen A einen Körper auf, der wie im Schnitt gezeigt eine Verjüngung zur Spitze hin erfährt. Die Längen L der einzelnen Verankerungsabschnitte A umfassen dabei mindestens 40% der gesamten Länge L_{ges} der Halteleiste 4. Die Verbindungen entlang einer großen Länge verbessert die Stabilität der Anordnung und erleichtert die Montage weiter, da nur noch wenige Verankerungsabschnitte A verbunden werden müssen. Auch die U-förmigen Abschnitte C können als einzelne zylindrische Strukturen oder eben als u-förmige Streifen ausgebildet sein. Dabei ist die Länge der u-förmigen Streifen C L_{c} ebenfalls so gewählt, dass mindesten 40% der Gesamtlänge davon eingenommen werden. Die beiden Strukturen sind in der Ausführungsform der Figur 3 versetzt zueinander angeordnet, können aber auch gegenüber voneinander angelegt sein. Die Längen der Befestigungsbereiche L und die Längen der u-fömigen Bereiche C müssen dabei nicht gleich sein. In einer bevorzugten Ausführungsform ist entspricht die Länge der u-förmigen Abschnitte L_{c} und der Längen L der Befestigungsabschnitte der Gesamtlänge L_{ges} der Halteleiste, wobei die beiden Strukturen in ihren Längen gegeneinander versetzt angeordnet sind.

### Bezugszeichenliste

- 1: Faltverdeck
- 2: Verdeckbezug
- 3: Dachflächenbauteil
- 4: Halteleiste
- 5: Haltestab des Innenhimmels
- 6: Innenhimmel
- 7: Anzugstreifen
- 8: Verkleidung

- A: Verankerungsabschnitt
- B: Oberseite
- C: U-Profil
- F: Flügel
- L_{ges}: gesamte Länge
- L: Länge der Verbindungsabschnitte
- Kᵤ: unterer Bereich
- Lc: Länge u-förmiger Abschnitt

## Patentansprüche

1. Faltverdeck (1) für Kraftfahrzeuge, wobei das Faltverdeck (1) zwischen einer einen Fahrgastinnenraum überspannenden Schließstellung und einer in einen Aufbewahrungsraum abgelegten Offenstellung bringbar ist, umfassend ein Dachflächenbauteil (3), einen Verdeckbezug (2), einen Anzugstreifen (7) des Verdeckbezugs (2), einen Innenhimmel (6) und eine Halteleiste (4), wobei die Halteleiste (4) quer zur Fahrzeuglängsrichtung angeordnet ist, wobei die Halteleiste (4) mit dem Dachflächenbauteil (3) in Eingriff ist, wobei die Halteleiste (4) einen ersten Endbereich (A) aufweist, die im Dachflächenbauteil (3) eingehakt ist,
**dadurch gekennzeichnet, dass** der erste Endbereich (A) der Halteleiste (4) einen Verankerungsabschnitt aufweist der in Z-Richtung nach oben ausgebildet ist, und wobei die Halteleiste (4) einen dem ersten Endbereich (A) gegenüberliegenden zweiten Endbereich (C) aufweist, der ein U-Profil ausbildet, wobei der Innenhimmel (6) mit dem zweiten Endbereich (C) verbunden ist.

2. Faltverdeck (1) für Kraftfahrzeuge nach Anspruch 1,
**dadurch gekennzeichnet, dass** das Dachflächenbauteil (3) zumindest eine Ausnehmung zur Aufnahme des ersten Endbereichs (A) der Halteleiste (4) aufweist.

3. Faltverdeck (1) für Kraftfahrzeuge nach Anspruch 1,
**dadurch gekennzeichnet, dass** die Halteleiste (4) an den Anzugstreifen (7) des Verdeckbezugs (2) angenäht ist.

4. Faltverdeck (1) für Kraftfahrzeuge nach Anspruch 3,
**dadurch gekennzeichnet, dass** der Anzugstreifen (7) des Verdeckbezugs (2) an der Oberseite (B) der Halteleiste (4) angenäht ist.

5. Faltverdeck (1) für Kraftfahrzeuge nach zumindest einem der vorhergehenden Ansprüche,
**dadurch gekennzeichnet, dass** die Halteleiste (4) lösbar mit dem Dachflächenbauteil (3) verbunden ist.

6. Faltverdeck (1) für Kraftfahrzeuge nach Anspruch 1,
**dadurch gekennzeichnet, dass** der Verankerungsabschnitt des ersten Endbereichs (A) der Halteleiste (4) elastisch ausgebildet ist.

7. Faltverdeck (1) für Kraftfahrzeuge nach zumindest einem der vorhergehenden Ansprüche,
**dadurch gekennzeichnet, dass** der Innenhimmel (6) mit dem U-Profil verbunden ist, insbesondere durch Einhängen eines Haltestabs (5) des Innenhimmels (6) in das U-Profil.

8. Faltverdeck (1) für Kraftfahrzeuge nach zumindest einem der vorhergehenden Ansprüche,
**dadurch gekennzeichnet, dass** der zweite Endbereich (C) der Halteleiste (4) im verbauten Zustand in Fahrzeuglängsrichtung hinten angeordnet ist.

9. Faltverdeck (1) für Kraftfahrzeuge nach zumindest einem der vorhergehenden Ansprüche,
**dadurch gekennzeichnet, dass** der Befestigungsbereich (A) der Halteleiste (4) sich entlang einer Länge (L) entlang der Fahrzeugquerachse erstreckt.

10. Faltverdeck (1) für Kraftfahrzeuge nach zumindest einem der vorhergehenden Ansprüche,
**dadurch gekennzeichnet, dass** die Längen (L) und die Längen der u-förmigen Bereiche (L_{c}) versetzt zueinander oder gegenüberliegend angeordnet sind

11. Faltverdeck (1) für Kraftfahrzeuge nach zumindest einem der vorhergehenden Ansprüche,
**dadurch gekennzeichnet, dass** die Längen (L) und/oder die Längen der u-förmigen Bereiche (L_{c}) mindestens 40% der Gesamtlänge (L_{ges}) ausmachen.

12. Faltverdeck (1) für Kraftfahrzeuge nach zumindest einem der vorhergehenden Ansprüche,
**dadurch gekennzeichnet,** die Längen (L) und/oder die Längen der u-förmigen Bereiche (L_{c}) zusammen die Gesamtlänge (L_{ges}) ausmachen.

## Claims

1. Folding top (1) for motor vehicles, wherein the folding top (1) can be brought between a closed position spanning a passenger compartment interior and an open position deposited into a storage space, comprising a roof surface component (3), a folding-top cloth (2), a tightening strip (7) of the folding-top cloth (2), a headlining (6) and a retaining strip (4), wherein the retaining strip (4) is arranged transversely with respect to the longitudinal direction of the vehicle, wherein the retaining strip (4) is in engagement with the roof surface component (3), wherein the retaining strip (4) has a first end region (A) which is hooked in in the roof surface component (3), **characterized in that** the first end region (A) of the retaining strip (4) has an anchoring portion which is formed upwards in the Z direction, and wherein the retaining strip (4) has a second end region (C) which lies opposite the first end region (A) and forms a U profile, wherein the headlining (6) is connected to the second end region (C).

2. Folding top (1) for motor vehicles according to Claim 1, **characterized in that** the roof surface component (3) has at least one recess for receiving the first end region (A) of the retaining strip (4).

3. Folding top (1) for motor vehicles according to Claim 1, **characterized in that** the retaining strip (4) is sewn onto the tightening strip (7) of the folding-top cloth (2).

4. Folding top (1) for motor vehicles according to Claim 3, **characterized in that** the tightening strip (7) of the folding-top cloth (2) is sewn to the upper side (B) of the retaining strip (4).

5. Folding top (1) for motor vehicles according to at least one of the preceding claims, **characterized in that** the retaining strip (4) is connected releasably to the roof surface component (3).

6. Folding top (1) for motor vehicles according to Claim 1, **characterized in that** the anchoring portion of the first end region (A) of the retaining strip (4) is of elastic design.

7. Folding top (1) for motor vehicles according to at least one of the preceding claims, **characterized in that** the headlining (6) is connected to the U profile, in particular by hooking a retaining rod (5) of the headlining (6) into the U profile.

8. Folding top (1) for motor vehicles according to at least one of the preceding claims, **characterized in that** the second end region (C) of the retaining strip (4) in the installed state is arranged at the rear in the longitudinal direction of the vehicle.

9. Folding top (1) for motor vehicles according to at least one of the preceding claims, **characterized in that** the fastening region (A) of the retaining strip (4) extends along a length (L) along the transverse axis of the vehicle.

10. Folding top (1) for motor vehicles according to at least one of the preceding claims, **characterized in that** the lengths (L) and the lengths of the U-shaped regions (L_{c}) are arranged offset with respect to one another or lying opposite.

11. Folding top (1) for motor vehicles according to at least one of the preceding claims, **characterized in that** the lengths (L) and/or the lengths of the U-shaped regions (L_{c}) make up at least 40% of the overall length (L_{ges}).

12. Folding top (1) for motor vehicles according to at least one of the preceding claims, **characterized in that** the lengths (L) and/or the lengths of the U-shaped regions (L_{c}) together make up the overall length (L_{ges}).

## Revendications

1. Toit escamotable (1) pour des véhicules automobiles, dans lequel le toit escamotable (1) peut être amené entre une position de fermeture recouvrant un habitacle des passagers et une position d'ouverture de dépôt dans un espace de rangement, comprenant un composant de surface de toit (3), un revêtement de toit escamotable (2), une bande de traction (7) du revêtement de toit escamotable (2), un ciel de toit intérieur (6) et une baguette de retenue (4), la baguette de retenue (4) étant disposée transversalement à la direction longitudinale du véhicule, la baguette de retenue (4) étant en prise avec le composant de surface de toit (3), la baguette de retenue (4) présentant une première région d'extrémité (A) qui est accrochée dans le composant de surface de toit (3),
**caractérisé en ce que** la première région d'extrémité (A) de la baguette de retenue (4) présente une portion d'ancrage qui est réalisée dans la direction Z vers le haut, et la baguette de retenue (4) présentant une deuxième région d'extrémité (C) opposée à la première région d'extrémité (A), qui constitue un profilé en U, le ciel de toit intérieur (6) étant raccordé à la deuxième région d'extrémité (C).

2. Toit escamotable (1) pour des véhicules automobiles selon la revendication 1,
**caractérisé en ce que** le composant de surface de toit (3) présente au moins un évidement pour recevoir la première région d'extrémité (A) de la baguette de retenue (4).

3. Toit escamotable (1) pour des véhicules automobiles selon la revendication 1,
**caractérisé en ce que** la baguette de retenue (4) est cousue à la bande de traction (7) du revêtement de toit escamotable (2).

4. Toit escamotable (1) pour des véhicules automobiles selon la revendication 3,
**caractérisé en ce que** la bande de traction (7) du revêtement de toit escamotable (2) est cousue au côté supérieur (B) de la baguette de retenue (4).

5. Toit escamotable (1) pour des véhicules automobiles selon au moins l'une quelconque des revendications précédentes,
**caractérisé en ce que** la baguette de retenue (4) est connectée de manière amovible au composant de surface de toit (3).

6. Toit escamotable (1) pour des véhicules automobiles selon la revendication 1,
**caractérisé en ce que** la portion d'ancrage de la première région d'extrémité (A) de la baguette de retenue (4) est réalisée sous forme élastique.

7. Toit escamotable(1) pour des véhicules automobiles selon au moins l'une quelconque des revendications précédentes,
**caractérisé en ce que** le ciel de toit intérieur (6) est raccordé au profilé en U, en particulier par accrochage d'une barre de retenue (5) du ciel de toit intérieur (6) dans le profilé en U.

8. Toit escamotable (1) pour des véhicules automobiles selon au moins l'une quelconque des revendications précédentes,
**caractérisé en ce que** la deuxième région d'extrémité (C) de la baguette de retenue (4) est disposée vers l'arrière dans l'état monté dans la direction longitudinale du véhicule.

9. Toit escamotable (1) pour des véhicules automobiles selon au moins l'une quelconque des revendications précédentes,
**caractérisé en ce que** la région de fixation (A) de la baguette de retenue (4) s'étend le long d'une longueur (L) le long de l'axe transversal du véhicule.

10. Toit escamotable (1) pour des véhicules automobiles selon au moins l'une quelconque des revendications précédentes,
**caractérisé en ce que** les longueurs (L) et les longueurs des régions en forme de U (L_{c}) sont disposées de manière décalée les unes par rapport aux autres ou en regard les unes des autres.

11. Toit escamotable (1) pour des véhicules automobiles selon au moins l'une quelconque des revendications précédentes,
**caractérisé en ce que** les longueurs (L) et/ou les longueurs des régions en forme de U (Lc) représentent au moins 40 % de la longueur totale (L_{ges}).

12. Toit escamotable (1) pour des véhicules automobiles selon au moins l'une quelconque des revendications précédentes,
**caractérisé en ce que** les longueurs (L) et/ou les longueurs des régions en forme de U (L_{c}) constituent ensemble la longueur totale (L_{ges}).
